# EUROPEAN PATENT APPLICATION

(11) **EP 1 998 213 A1**
(43) Date of publication of application: **03.12.2008**
(21) Application number: 08006316.7
(22) Date of filing: 31.03.2008
(51) Int. Cl.: G02B 26/10, G02F 1/33, H04N 9/31

(54) **Projector**

(30) Priority: 29.05.2007 KR 20070052285
(71) Applicant: Samsung Electronics Co., Ltd., Suwon-si Gyeonggi-do (KR)
(72) Inventor: Park, Mun-Kuc, Suwon-si Gyeonggi-do (KR); Kim, Yong-Kwan, Suwon-si Gyeonggi-do (KR)
(74) Representative: Lang, Johannes

(57) **Abstract**

A projector (100) includes: a plurality of light sources (111-113) for generating lights having different colors; a spatial optical modulator (120) for performing a line-modulation of the lights; wavelength selection filters (141-142), disposed between the light sources and the spatial optical modulator, for transmitting or reflecting the lights according to light wavelengths; and a scanner (131) for projecting the light incident from the spatial optical modulator in a line-scan scheme.

## Description

### BACKGROUND OF THE INVENTION

### 1. Field of the Invention

The present invention relates to a projector for image reproduction, and more particularly to a projector including a spatial optical modulator.

### 2. Description of the Related Art

A mobile terminal technology provides various functions and services, such as a digital camera, MP3, DMB, a PC, health care, etc. In addition, the mobile terminal has also evolved to share information and functions with other mobile terminals, personal computers or electric home appliances connected thereto.

However, a mobile terminal has a limited screen size which restricts image information provided to a user. In order to improve this problem, a front touch panel type terminal has been available. However, this type of terminal still has a limited view according to the house size of a mobile terminal.

Accordingly, there is a need of a mobile terminal capable of providing a larger image projection.

### SUMMARY OF THE INVENTION

Accordingly, the present invention has been made to solve the above-mentioned problems occurring in the prior art, by providing a projector which can be implemented in a small volume and in which optical axis alignment can be easily performed.

In accordance with an aspect of the present invention, a projector includes: a plurality of light sources for generating lights having different colors; a spatial optical modulator for performing a line-modulation for the lights and for emitting the lights; a plurality of wavelength selection filters, disposed between the light sources and the spatial optical modulator, for transmitting or reflecting the lights according to wavelengths of the lights; a scanner for projecting the light incident from the spatial optical modulator in a line-scan scheme; and a diffraction aperture, disposed between the scanner and the spatial optical modulator, for selecting diffraction orders of the lights subjected to the line-modulation in the spatial optical modulator.

### BRIEF DESCRIPTION OF THE DRAWINGS

The above and other aspects, features and advantages of the present invention will be more apparent from the following detailed description taken in conjunction with the accompanying drawings, in which:
- FIG. 1: is a view illustrating a projector according to an embodiment of the present invention;
- FIG. 2: is a perspective view illustrating a converging lens system illustrated in FIG. 1;
- FIG. 3: is a graph illustrating measurements of transmission and reflection properties according to a wavelength band of a second wavelength selection filter illustrated in FIG. 1; and
- FIGS.: 4a and 4b are graphs for comparing a linewidth of light projected by a conventional projector with a linewidth of light projected by a projector according to the present invention.

### DETAILED DESCRIPTION OF THE PRESENT INVENTION

Hereinafter, an embodiment of the present invention will be described with reference to the accompanying drawings. For the purposes of clarity and simplicity, detailed descriptions of known functions or configurations incorporated herein is omitted to avoid making the subject matter of the present invention unclear.

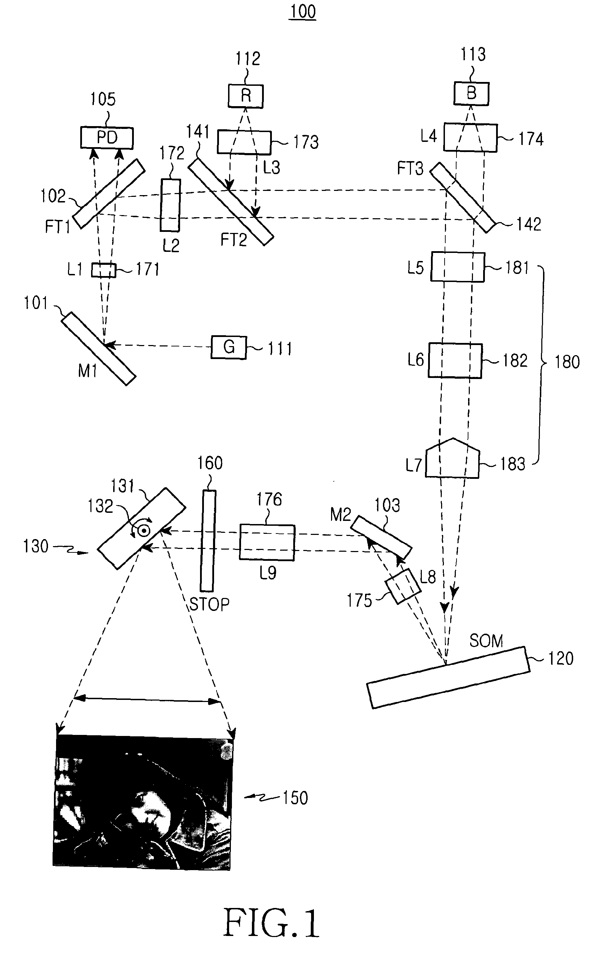

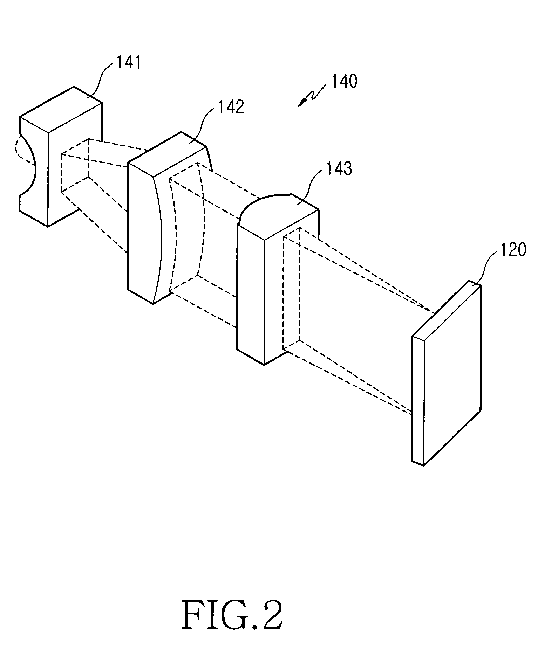

FIG. 1 illustrates a detailed structure of a projector according to an embodiment of the present invention. FIG. 2 illustrates a perspective of a converging lens system illustrated in FIG. 1.

Referring to FIGS. 1 and 2, the projector 100 according to the embodiment of the present invention includes a first, a second and a third light source 111 to 113 for generating lights having different wavelengths, a first, a second and a third reflection filter 101 to 103 for changing the paths of incident lights, a first to a ninth lens 171 to 176 and 180, a first and a second wavelength selection filter 141 and 142, a spatial optical modulator 120 for modulating incident lights through reflection diffraction, a diffraction aperture 160 for limiting the diffraction orders of the incident lights, and a scanner 130 for forming an image onto a screen 150 by a line-scanning of light incident from the diffraction aperture 160. Since the projector 100 sequentially projects red image, green image and blue image onto the screen 150, at least two colors out of red image, green image and blue image do not simultaneously moves in the same path.

The first light source 111 emits a green light. The green light emitted from the first light source 111 is reflected from the first reflection filter 101 and passes through the first lens 171. The partial reflection filter 102 partially reflects a part of the green light passing through the first lens 171 to the second lens 172. The second lens 172 and the first wavelength selection filter 141 transmit the green light to the second wavelength selection filter 142. The second wavelength selection filter 142 reflects the light passing through the first wavelength selection filter 141 to a fifth, a sixth and a seventh lens 181, 182 and 183. The fifth, the sixth and the seventh lenses 181, 182 and 183 transmit the green light reflected by the second wavelength selection filter 142 to the spatial optical modulator 120. The green light reflected from the spatial optical modulator 120 to the eighth lens 175 passes through the eighth lens 175 and is reflected to the ninth lens 176 by the third reflection filter 103. The green light reflected to the ninth lens 176 passes through the diffraction aperture 160 and is reflected to the screen 150 by the scanner 130.

A red light emitted from the second light source 112 passes through the third lens 173 and is reflected to the second wavelength selection filter 142 by the first wavelength selection filter 141. The second wavelength selection filter 142 reflects the red light to the fifth, the sixth and the seventh 181, 182 and 183. The fifth, the sixth and the seventh 181, 182 and 183 lenses transmit the red light to the spatial optical modulator 120. The spatial optical modulator 120 reflects the red light to the eighth lens 175 and to the third reflection filter 103 side. The third reflection filter 103 reflects the red light to the ninth lens 176. The red light reflected to the ninth lens passes through the ninth lens and is incident to the scanner 130 through the diffraction aperture 160. The red light is reflected to the screen side by the scanner 130.

The light source 111 can generate the green light by a method in which the second harmonic wave is generated in such a manner as to convert a light having a relatively long wavelength into a light having a relatively short wavelength. For example, a diode pumping solid state (DPSS) laser capable of outputting a green light having a wavelength of 532±5nm can be used as the first light source 111.

The first reflection filter 101 can reduce the volume of the projector 100 by turning a path, along which the green light emitted from the first light source 111 arrives at the first lens 171, by 90 degrees.

That is, if a light emitted from the first light source 111 is disposed in such a manner that the light is aligned with the first lens 171, the volume of the projector greatly increases because the first light source 111 has a large volume. Accordingly, the first light source 111 is located in the center of the projector 100, and other constituent elements are arranged around the first light source 111, such that the volume of the projector 100 can be reduced.

The first lens 171 increases the spot size of the green light reflected from the first reflection filter 101 and emits the green light to the partial reflection filter 102. The partial reflection filter 102 transmits a part of the green light incident from the first lens 171 to an optical detector 105, and reflects the rest of the green light to the second lens 172.

The partial reflection filter 102 can reduce the volume of the projector 100 by turning a light path from the first lens 171 to the second lens 172 by 90 degrees. A mirror to which an optical coating is applied can be used as the first reflection filter 101 and as the partial reflection filter 102. A part of the incident light can be reflected by the above-described mirror or can be passed through the above-described mirror.

Especially, the partial reflection filter 102 can be formed by a multi-layer optical coating. It is preferable to provide the partial reflection filter 102 with a transmittance of 5 % to 15 % (or, a reflexibility of 85 % to 95 %) so that the part of the green light incident to the optical detector 105 can pass therethrough.

Accordingly, the optical detector 105 can detect the power of the green light passing through the partial reflection filter 102, and can control the first light source 111 to maintain a certain output by using the detected power. An common photodiode can be used as the optical detector 105. The second lens 172 collimates the green light incident from the partial reflection filter 102 and outputs the green light to the first wavelength selection filter 141.

For example, the second light source 112 outputs a red light having a wavelength of 640±10nm. An common laser diode can be used as the second light source 112. The third lens 173 collimates the red light incident from the second light source 112 and emits the red light to the first wavelength selection filter 141.

The first wavelength selection filter 141 reflects the red light incident from the third lens, 173 to the second wavelength selection filter 142, and transmits the green light incident from the second lens 172 to the second wavelength selection filter 142.

For example, an common laser diode capable of outputting a blue light having a wavelength of 440±10nm can be used as the third light source 113. The fourth lens 174 collimates the blue light incident from the third light source 113 and emits the blue light to the second wavelength selection filter 142.

The first to the third light sources 111 to 113 generate lights having different colors. The lights have mutually different converging points (i.e., focus distances) according to each of the wavelengths thereof in the same optical system. That is, foci of the lights (i.e., red, blue and green) convergent to the spatial optical modulator 120 are different according to the each of the wavelengths thereof, thereby, possibly causing a phenomenon such as a color spread on an image formed onto the screen 150.

Therefore, in the projector 100 according to the present invention, the distance between the converging lens system 180 and the spatial optical modulator 120 is adjusted on the basis of the green light generated by the first light source 111, and distances between the second light source 112 and the third lens 173, and between the third light source 113 and the fourth lens 174 are respectively adjusted by using active alignment, such that the difference of converging point caused by the optical wavelength difference can be minimized. That is, in the present invention, the light sources and the spatial optical modulator are arranged in such a manner that each of distances between the first light source 111 and the spatial optical modulator 120, between the second light source 112 and the spatial optical modulator 120, and between the third light source 113 and the spatial optical modulator 120 corresponds to each converging point (i.e., a focus distance) according to the wavelength of each of lights generated by the light sources 111 to 113, and thus, it is unnecessary to further include an extra lens for a chromatic aberration compensation. Accordingly, it is possible to easily align an optical axis and reduce costs through the present invention.

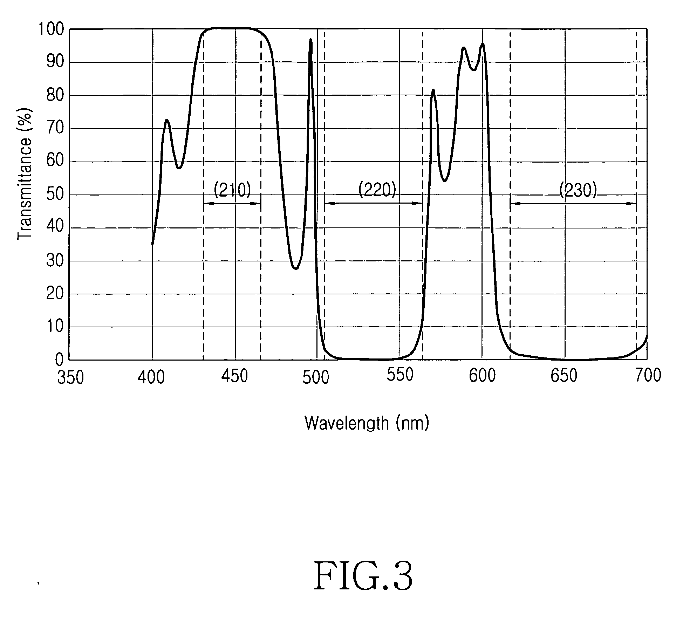

FIG. 3 illustrates measurement of properties of transmission and reflection according to the wavelength band of a second wavelength selection filter illustrated in FIG. 1. Referring to FIG. 3, the second wavelength selection filter 142 reflects the red or green light incident from the first wavelength selection filter 141, to the fifth lens 181, or transmits the blue light incident from the fourth lens 174, to the fifth lens 181. The second wavelength selection filter 142 can reduce the volume of the projector 100 by turning a light path from the first wavelength selection filter 141 to the fifth lens 181 by 90 degrees.

That is, it can be noted that the second wavelength selection filter 142 has a transmittance of more than 90 % in the blue light wavelength band 210 and a transmittance of less than 10 % in the green light wavelength band 220 and red light wavelength band 230. Accordingly, the second wavelength selection filter 142 can transmit the blue light while reflecting the red and green light.

FIG. 2 illustrates a perspective view of the converging lens system 180 illustrated in FIG. 1. The converging lens system 180 is configured with the fifth to the seventh lenses 181 to 183. The converging lens system 180 converges the light (i.e., red, green or blue light), which is incident from the second wavelength selection filter 142, to an input surface and an output surface of the spatial optical modulator 120.

The fifth lens 181 corresponds to a diffusing lens and diffuses the incident light. The light diffused by the fifth lens 181 is collimated by the sixth lens 182. The seventh lens 183 converges the collimated light to the spatial optical modulator 120.

The spatial optical modulator 120 operates by means of an image data having information about one certain pixel column of a projected image externally provided, and performs a line-modulation for the light from the converging lens system 180 by using a reflective diffraction, and emits the light to the eighth lens 175.

A plurality of diffraction elements is provided on the surface where the light of the spatial optical modulator 120 is incident and is emitted. The number of the diffraction elements may be determined by a quality level of image intended to be formed onto the screen 150. The each diffraction element diffracts and reflects the incident light. A power of diffracted light is set according to a corresponding pixel information.

The eighth lens 175 emits the light which is incident from the spatial optical modulator 120 to the third reflection filter 103. The third reflection filter 103 reflects the light which is incident from the eighth lens 175 to the ninth lens 176.

The ninth lens 176 converges the light incident from the third reflection filter 103 in such a manner as to form a focus on the reflective surface of the scanner 130. The light reflected from the scanner 130 is irradiated on the screen 150 in the line-scan manner, so as to form images.

The diffraction aperture 160 is disposed between the ninth lens 176 and the scanner 130, and has a function of limiting the spot size of the light incident to the scanner 130. That is, the diffraction aperture 160 intercepts a part of the light incident from the ninth lens 176 (that is, a diffraction light having a first or higher order mode) and passes the rest of the light (that is, a diffraction light having a zero order mode) through the scanner 130, so as to removes noise components of a projected image.

The scanner 130 projects the light which is incident from the spatial optical modulator 120 onto the screen in the scheme of a line-scan. The scanner 130 includes a scan mirror 131 which swings and rotates about an axis of rotation 132 clockwise or counterclockwise according to a certain period. An image projected onto the screen at a certain point of time is shown in the form of a line corresponding to one pixel column. The lined image moves from side to side according to the rotation of the scan mirror 131 in the direction of pixel rows, such that an image frame is formed.

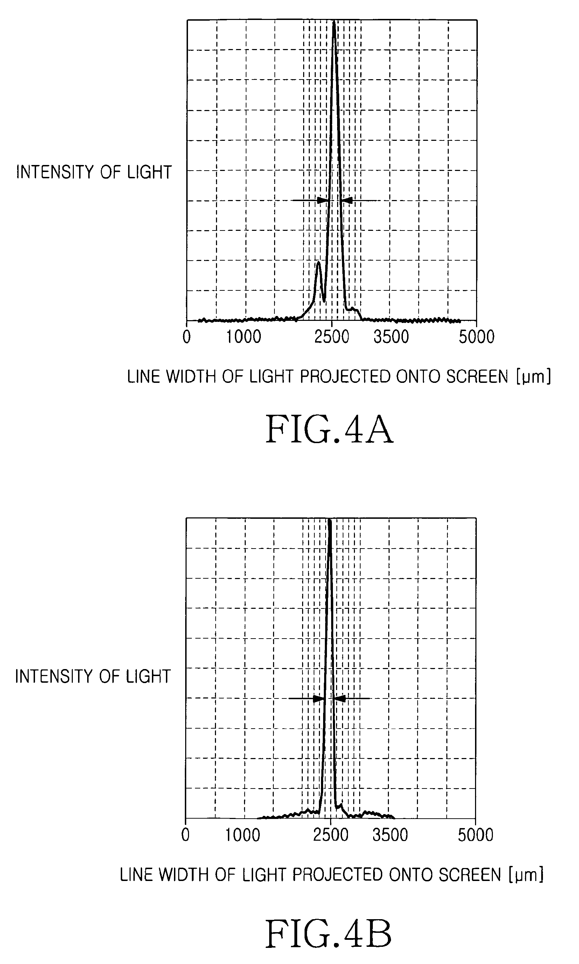

FIGS. 4a and 4b draw a comparison between a linewidth of light projected by a conventional projector and a linewidth of light projected by a projector according to the present invention. More specifically, FIG. 4a is a graph showing a measurement of a linewidth of light projected on a certain point of the screen by a conventional projector. FIG. 4b is a graph showing a measurement of a linewidth of light projected on a certain point of the screen by a projector according to the present invention.

In FIG. 4a and FIG. 4b, the horizontal axis (that is, a length and a linewidth of the scanned line projected on the screen) is shown and each interval between every two adjacent large scales included in 0µm to 5000µm corresponds to 500µm. Additionally, in FIG. 4a and FIG. 4b, small scales included in 2000µm to 3000µm, around 2500µm, where each interval between every two adjacent small scales corresponds to 100µm, are shown. For one certain intensity of light (that is, arrows shown in FIG. 4a and FIG. 4b), in the case where a linewidth of light projected in FIG. 4a is compared with a linewidth of light projected in FIG. 4b, the linewidth of light in FIG.4a corresponds to a linewidth of about 200µm, and the linewidth of light in FIG.4b corresponds to a linewidth of more than 100µm and less than 200µm. Accordingly, as compared with the light in FIG. 4b, the light in FIG. 4a has a narrow linewidth. That is, while a projector according to the present invention has a thin structure, it can also provide an image quality having an enhanced resolution compared to a conventional projector.

In the projector according to the present invention, in consideration of each converging point according to the wavelength of each of lights generated by the each light source, each of distances between the first light source and the spatial optical modulator, between the second light source and the spatial optical modulator, and between the third light source and the spatial optical modulator is adjusted by active alignment, so that it is unnecessary to further include an extra lens for a chromatic aberration compensation.

In the present invention, since it is possible to easily align an optical axis, the present invention may be easily applied to a miniaturized projector, and a lens for a chromatic aberration compensation is not required to be further included, such that it is possible to prevent the occurrence of image quality deterioration resulting from a possible error when aligning an optical axis for a chromatic aberration compensation lens.

While the projector described in the present invention is not limited to the embodiment and drawings described above, it will be understood by those skilled in the art that various substitutions, modifications and changes in form and details may be made therein without departing from the spirit and scope of the invention as defined by the appended claims.

## Claims

1. A projector comprising:
a plurality of light sources for generating lights having different colors;
a spatial optical modulator disposed adjacent to one of the plurality of light sources for performing a line-modulation for the lights;
a plurality of wavelength selection filters, disposed between the light sources, for transmitting or reflecting the lights according to wavelengths of the lights; and
a scanner for projecting the light incident from the spatial optical modulator according to a line-scan scheme.

2. The projector as claimed in claim 1, further comprising a diffraction aperture, disposed between the scanner and the spatial optical modulator, for selecting diffraction orders of the lights subjected to the line-modulation in the spatial optical modulator.

3. The projector as claimed in claim 2, wherein the diffraction aperture transmits zero order of diffraction of light incident from the spatial optical modulator.

4. The projector as claimed in claim 1, wherein the spatial optical modulator diffracts and reflects each of incident lights, and comprises a plurality of diffraction elements arranged in a form of line, on the input/output stage thereof.

5. The projector as claimed in claim 1, wherein one of the plurality of light sources corresponds to a green light source generating a second harmonic wave.

6. The projector as claimed in claim 5, wherein the green light source is driven by a pulse drive signal and is used for forming a green sub-frame through RGB sequence manner.

7. The projector claimed in claim 1, wherein the first light sources is disposed in the center of the projector.

8. A projector comprising:
a first light source for generating a green light;
a second and a third light sources arranged in such a manner as to emit a red and a blue light, respectively, in a direction perpendicular to an emission direction of the first light source;
a spatial optical modulator for performing a line-modulation for the lights;
a first wavelength selection filter for reflecting the red light emitted by the second light source in a direction perpendicular to the emission direction of the red light and for transmitting the green light;
a second wavelength selection filter for reflecting the green and the red light incident from the first wavelength selection filter, to the spatial optical modulator, and for transmitting the blue light emitted from the third light source, to the spatial optical modulator; and
a scanner for projecting the lights incident from the spatial optical modulator, according to a line-scan scheme.

9. The projector claimed in claim 8, further comprising:
a first reflection filter for reflecting a light emitted by the first light source perpendicularly to the emission direction of the light;
a partial reflection filter for reflecting the light reflected by the first reflection filter to the first wavelength selection filter;
a second reflection filter for reflecting the light incident from the spatial optical modulator, to the scanner; and
a diffraction aperture, disposed between the scanner and the spatial optical modulator, for selecting diffraction orders of the lights subjected to the line-modulation in the spatial optical modulator and for transmitting the lights to the scanner.

10. The projector as claimed in claim 9, wherein the diffraction aperture transmits zero order of diffraction of light incident from the spatial optical modulator.

11. The projector claimed in claim 8, further comprising a converging lens system, disposed between the spatial optical modulator and the second wavelength selection filter, for converging the light incident from the second wavelength selection filter, to the spatial optical modulator.

12. The projector claimed in claim 8, wherein the light sources and the spatial optical modulator are arranged in such a manner that distances between the first light source and the spatial optical modulator, between the second light source and the spatial optical modulator, and between the third light source and the spatial optical modulator are mutually different according to the wavelength of each of the lights generated by the first to the third light sources.

13. The projector claimed in claim 8, wherein the first light sources is disposed in the center of the projector.

14. The projector claimed in claim 8, wherein the second and third light sources, the spatial optical modulator, the first and second wavelength selection filters, and the scanner are arranged around the first light source.

15. The projector claimed in claim 8, wherein the first light source generates the green light by a method in which a second harmonic wave is generated in such a manner as to convert a light having a relatively long wavelength into a light having a relatively short wavelength.
